Europäisches Patentamt

European Patent Office

Office européen des brevets

(11) Publication number: **0 190 907**
**A1**

## (12) EUROPEAN PATENT APPLICATION

(21) Application number: **86300714.2**

(22) Date of filing: **03.02.86**

(51) Int. Cl.⁴: **F 16 L 39/04**
**B 23 Q 1/00**

(30) Priority: **06.02.85 GB 8503046**

(43) Date of publication of application:
**13.08.86 Bulletin 86/33**

(84) Designated Contracting States:
**DE GB IT SE**

(71) Applicant: **LISTER-PETTER LIMITED**

**Dursley Gloucestershire GL11 4HS(GB)**

(72) Inventor: **Love, Andrew**
**5, Griffiths Close Stratton St. Margaret**
**Swindon(GB)**

(74) Representative: **Adkins, Michael et al,**
**Withers & Rogers 4 Dyer's Buildings**
**Holborn London, EC1N 2JT(GB)**

(54) A fluid tight coupling and a tool carrier.

(57) A fluid tight coupling (26), particularly for use in the jointed arm (10) of an industrial robot to enable fluid to be directed to a fluid operable device (11) on the arm, and comprising a male and a female member, one of the members having at least three inlet ducts and the other of the members at least three outlet ducts. The jointed arm (10) can carry a tool holder (11); the tool holder (11) has a movable retainer element to releasably retain a tool part by means of a wedge surface which urges the tool part towards a surface on the tool carrier. (11)

FIG.1

Croydon Printing Company Ltd.

EP 0 190 907 A1

# A FLUID TIGHT COUPLING AND A TOOL CARRIER

The invention relates to a fluid-tight coupling and is particularly, but not exclusively, concerned with a fluid-tight coupling for use in the jointed arm of an industrial robot to enable fluid to be ducted to a fluid operable device on the arm.

It has been proposed hitherto to provide a fluid-tight coupling comprising coaxial male and female members one of which defines a pair of inlet ducts and the other comprises a pair of coaxial tubes, the inner tube of which forms one outlet duct and the annular space between the tubes forming the other outlet duct. Such an arrangement is adequate where only two fluid ducts are necessary but where three or more separate fluid paths are required such a coupling is unsatisfactory. An object of the present invention is to provide a fluid-tight coupling which provides more than two fluid ducts.

Thus according to one feature of our invention we provide a fluid-tight coupling including an axially-extending female member, an axially-extending male member coaxial with said female member and fitted therewithin, one of said members defining a plurality of inlet ducts, the other of said members defining a plurality of outlet ducts, characterised in that said one of said members defines at least three inlet ducts and in that the other of said members defines at least three outlet ducts.

Fluid-tight couplings are known comprising flexible conduits bundled together, but such couplings require considerable radial space, which has been found undesirable for certain applications e.g. industrial robot arms. Thus according to a further feature of the invention there is provided a fluid-tight coupling comprising coaxial male and female members, one of which defines at least three inlet ducts and the other of which defines at least three outlet ducts, at least two of said inlet ducts being arranged to communicate with associated said outlet ducts at terminal positions which are spaced apart in the axial direction.

It has been further found that bundled flexible conduits are unsuitable for applications in which the ends of the couplings are required to rotate one relative to the other about a longitudinal axis. Thus we propose rigid members, one of which has a plurality of bored ducts therewithin. The other of the members may also have bored ducts, but preferably the ducts of the other member are internal (female member) or external (male member) peripheral ducts; the ducts can be grooves or flats, and at least two of the connected inlet and outlet ducts are offset axially.

The third inlet and outlet ducts may conveniently extend substantially coaxially through the members.

Sealing means, e.g. O-rings may be provided to prevent fluid leaking between said terminal positions.

At least one sealing means may be provided to prevent leakage of fluid from the coupling to the ambient air.

Preferably the male and female members are rotatable relatively about their common axes.

To ensure continued fluid connection upon said relative rotation, in one embodiment said at least two ducts in the male member terminate at a peripheral portion thereof within the female member, the female member having internal peripheral grooves which align with the inlet ducts at said peripheral portion and which define respective parts of the ducts therein. Alternatively, said male member is formed with external peripheral grooves which form respective parts of said at least two ducts therein, and the female member has an internal periphery at which the ducts therein terminate in alignment with said grooves. An intermediate groove may be defined in the grooved member which houses a fluid seal for effecting the seal between the terminal positions.

One or more further ducts may be arranged in each member. In such a case three ducts may be arranged in a circumferentially spaced manner in each member around the aforesaid coaxial duct.

The invention also includes an arm comprising a first section, a second section pivotally mounted on the first section to enable the two sections to be pivoted relative to each other about a transverse axis, and a fluid tight coupling as set out in any of the six immediately preceding paragraphs provided on each arm section, said couplings being interconnected by flexible conduit means to enable fluid to pass from one arm section to the other through the couplings. Preferably one said arm section is rotatable relative to the other and at least one of said couplings include relatively rotatable male and female members. The arm may form part of an industrial robot. Preferably one of the arm sections carries a device operable by means of fluid which passes through said couplings.

Conveniently the device includes a cylinder, one of the ducts having a connection to one end of the cylinder and another of the ducts having a connection to the other end of the cylinder. Preferably the cylinder is a separate part mounted in the device, to permit the cylinder to be machined to close tolerances, to avoid all the device being scrapped if the cylinder is not machined accurately, and to allow if required the cylinder to be of a different material to the remainder of the device.

A piston is positioned in the cylinder, and is movable axially along the cylinder e.g. relatively into and out of the cylinder in accordance with the supply and removal of fluid from said duct connections. The piston carries a tapered pin which preferably has a reduced diameter dowel which can locate accurately in a bush in the device, so that the pin is supported against tilting transverse to the cylinder.

The device conveniently has a transverse opening capable of receiving a tool holder. Thus if the tool holder has a frusto-conical bore sized to receive the tapered pin, this bore of the tool holder can be aligned with the pin and retained thereby when the piston is moved relatively out of the cylinder to its position in which the dowel is located in the bush. Preferably the tool holder is urged transversely by the pin so that the tool holder is urged against a sealing surface surrounding the transverse opening, conveniently a frusto-conical sealing surface; such urging can be effected if the pin axis is slightly offset from the tool holder bore. Usefully the tool holder can be released and replaced by another tool holder having a similarly sized and positioned frusto-conical bore, following retraction of the piston dowel from the bush upon movement of the piston relative to the cylinder.

A fluid-tight coupling in accordance with the invention will now be described by way of example with reference to the accompanying drawings in which:

Fig. 1 is a diagrammatic view of part of an industrial robot arm in which two fluid-tight couplings in accordance with the invention are used;

Fig. 2 is an external sectional elevation of part of the arm shown in Fig. 1;

Fig. 3 is an end view of one form of male member of the coupling;

Figs. 4 to 6 are cross-sections on the lines IV-IV V-V and VI-VI respectively in Fig. 3;

Fig. 7 is an end view looking in the direction of arrow Z in Fig. 6;

Fig. 8 is an end view of a further form of male member of the coupling;

Figs. 9 - 11 are cross-sections on the lines IX-IX, X-X and XI-XI respectively in Fig. 8;

Fig. 12 is an end view looking in the direction of arrow Y in Fig. 9;

Fig. 13 is an end view of a female member of the coupling;

Figs. 14 - 16 are cross-sections on lines XIV-XIV: XV-XV: XVI-XVI respectively in Fig. 13.

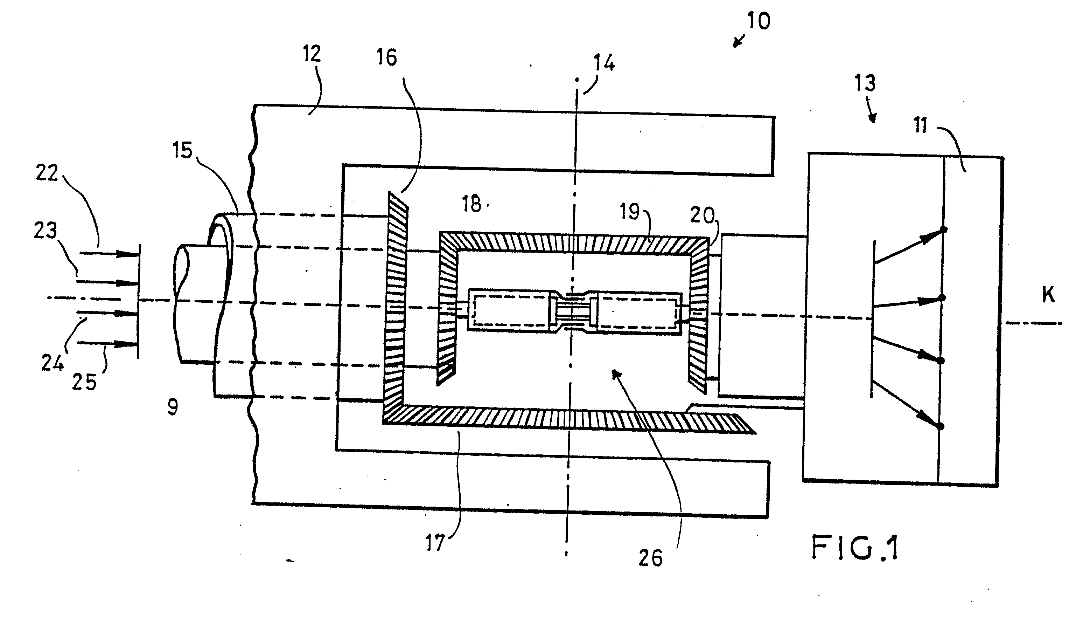

In Fig.1 an industrial robot arm 10 comprises a main section 12 and a head section 13 which are relatively pivotable about a transverse axis 14. The head section 13 carries a fluid operable device such as a tool changer 11. Relative pivotal movement (pitch) about axis 14 is performed by means of a rotary tube 15 on the main section 12 drivable in known manner, the tube 15 transmitting drive through gears 16, 17 to alter the pitch. The head section 13 can be rotated (roll) about its longitudinal axis K by means of a tube 9 coaxial with tube 15. Drive from tube 9 is transmitted to the head section through gears 18, 19 and 20. The gears 17, 19 rotate about axis 14

The head section 13 requires a fluid feed to operate the tool changer 11 and the present invention is concerned with providing a fluid coupling which will enable the feed to be effected. Fluid is supplied to the arm through four lines indicated generally at 22, 23, 24 and 25. The lines communicate with the head via a pair of fluid couplings indicated generally at 26 which enable fluid to pass therethrough during pitch and roll movement.

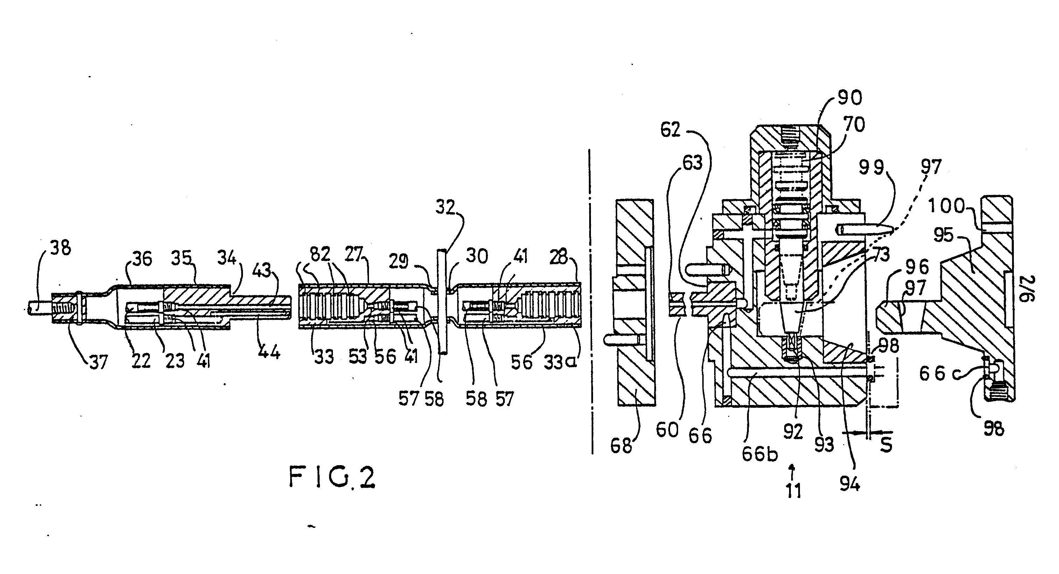

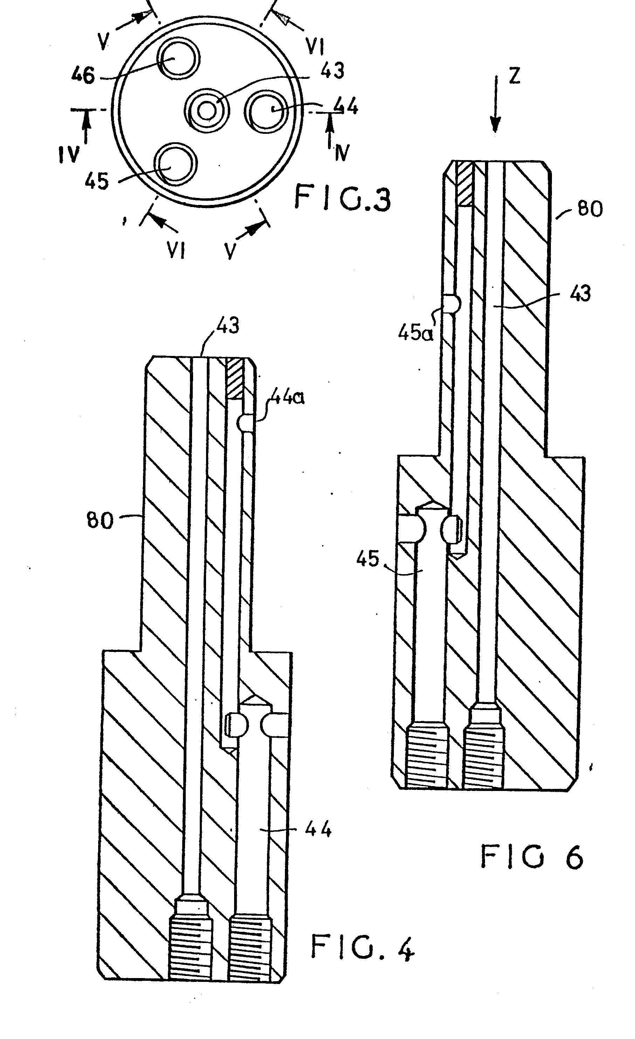

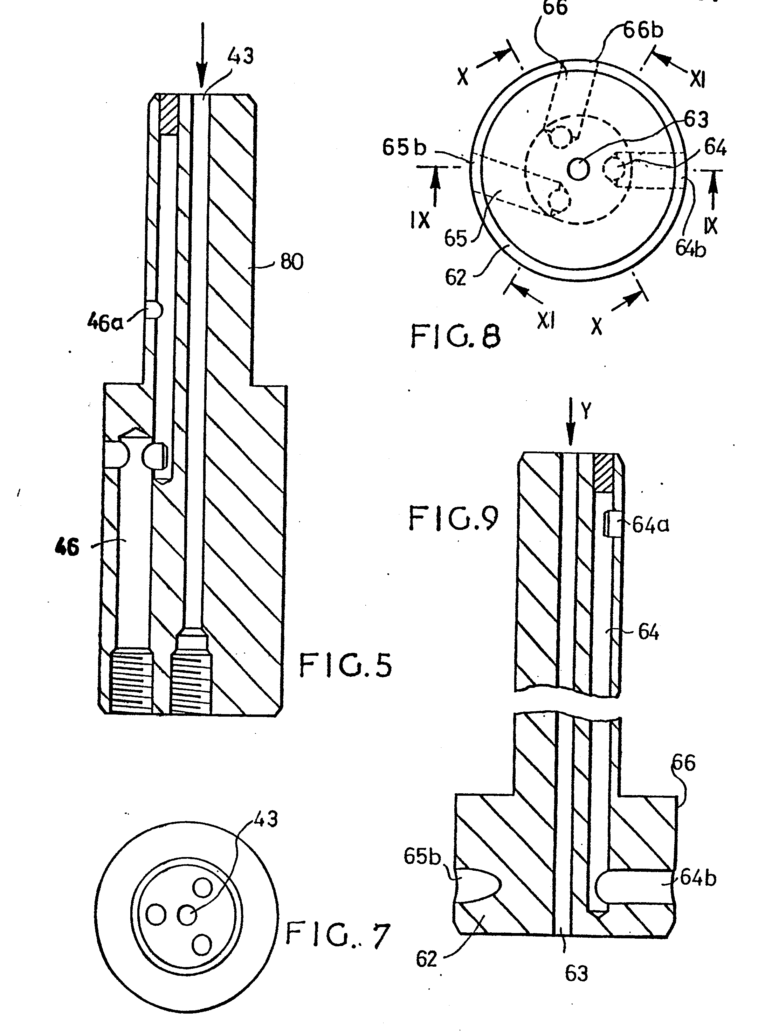

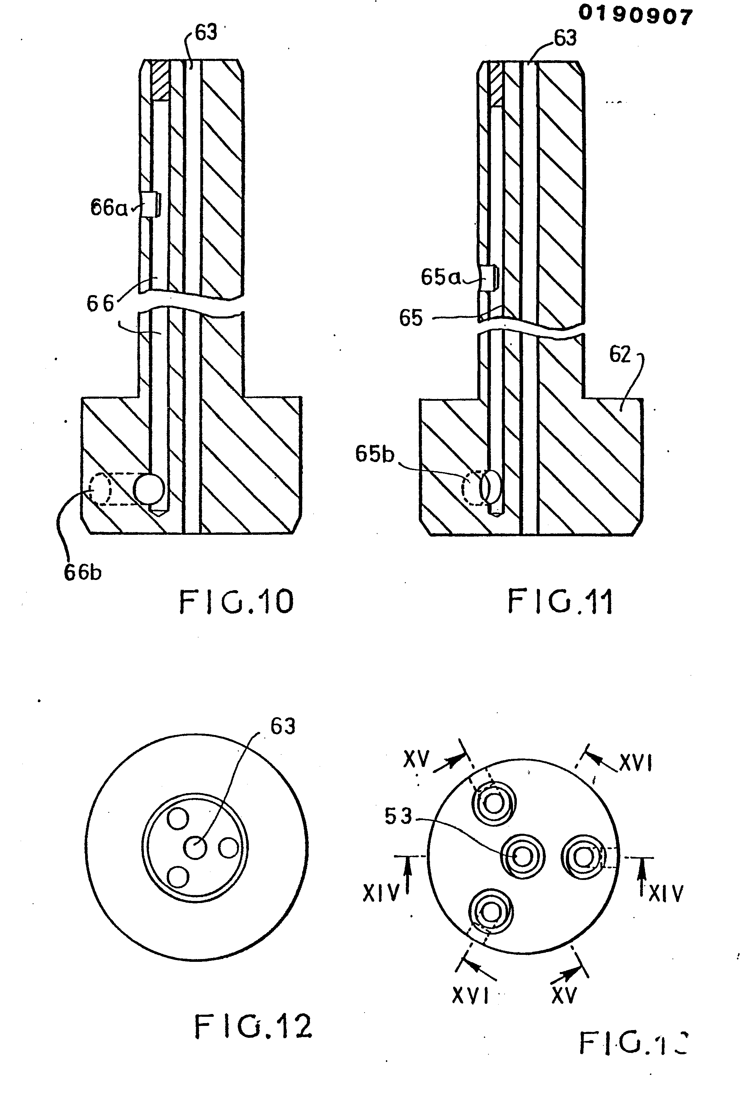

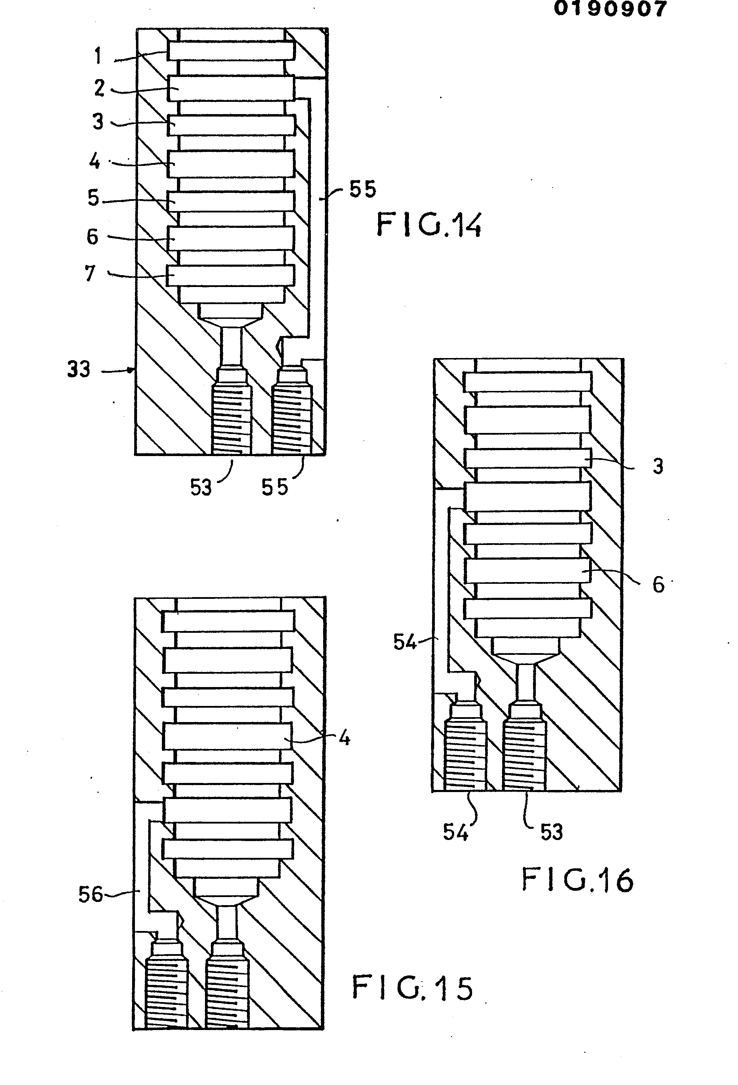

Figure 2 shows parts of the arm, and particularly the coupling 26, in greater detail. In Fig.2 two tubes 27, 28 have pairs of overlapping lugs 29, 30 through which a spindle 32 passes with working clearance to permit relative pivoting of the tubes. The spindle 32 defines the aforesaid axis 14 and is mounted on the main section 12 of the arm. The tube 27 sealingly contains a female coupling member 33 (shown in detail in Figs. 13 to 16) which receives a male coupling member 34 (shown in detail in Figs. 3 to 7; and the tube 28 sealingly contains a female coupling member 33a. The male coupling member 34 is sealingly housed within a tube 35 which has lugs 36 between which is mounted a block 37 connected to a support bar 38. The latter extends through tube 9 to a convenient mounting point on the main arm section 12, or a suitable alternative support. The fluid feed lines (two of which 22,23 are shown in Fig. 2) are connected to respective barbed connectors 41 on the male member 34 to carry fluid to respective inlet ducts 43, 44,45 and 46 in the male member; although ducts 44,45 and 46 are shown as bores within male member 34, in an alternative embodiment these can be in part or whole axial peripheral grooves or flats, sealed e.g. by tubes such as 27,28. A section of tube 23 is not coaxial with the associated outlet duct 44. As described below with respect to Figs. 3 to 7 and 13 to 16, when the male member 34 is fitted in the female member 33 the inlet ducts 43, 44,45 and 46 communicate with respective outlet ducts 53,54,55 and 56 in the female member 33, either to allow fluid to flow between the inlet ducts and the respective outlet ducts or to allow fluid pressure to be transmitted. The outlet ducts are fitted with barbed connectors 41 to which flexible pipes are fitted (two only of which 57,58 are shown). The pipes connect female member 33 with an identical female member 33a in tube 28 having ducts 53,54,55 and 56 (inlet ducts) which communicate with ducts 63,64,65 and 66 (outlet ducts) in a further male member 60 shown in detail in Figs. 8 to 11. The male member 60 has a head 62 through which the outlet ducts extend to enable fluid to flow to various areas of the tool changer 11, the latter being mounted in the head section 13 via an adaptor plate 68. Whilst tool change 11 can be changed manually, usefully the tool changer has an adaptor e.g. adaptor 72 (Fig. 2) which the head section 13 can approach, pick up and subsequently release; there may be a series of tool changers which the robot arm 10 can selectively engage, and subsequently position and drive. Outlet duct 63 may carry fluid for raising a piston 70 in the tool changer, outlet 65 may carry fluid for lowering piston 70 and outlet ducts 64,66 may carry fluid which is used to operate a tool when mounted on the carrier 11 via an adaptor 72. The tool carrier is described in more detail below.

Referring now to Figs. 3 to 6 the male member 34 is formed with three axial bores from the larger diameter end arranged as shown in Fig.3. The central bore defines duct 43, while the remaining bores define ducts 44, 45 and 46 which are circumferentially spaced and terminate at radial ports 44a, 45a, 46a in the periphery of a reduced diameter section 80. The ports are axially spaced so as to align with respective grooves in the associated female member. In Figs. 13 to 16 the female member 33 has its internal periphery formed with grooves 1 to 7. The lower end of the member 33 as shown is formed with four axial bores. The central bore defines the duct 53 and the remaining bores define together with           axial grooves along the outer surface of the female member the ducts 54, 55 and 56. Duct 54 terminates at internal groove 6, duct 56 terminates at internal groove 4 and duct 55 terminates at internal groove 2. When the male member 34 is positioned within the female member, the ports 44a, 46a and 45a align with the grooves 6, 4 and 2 respectively to enable fluid to flow from ducts 44, 45 and 46 to ducts 54, 55 and 56. Fluid in duct 43 can flow directly to duct 53. O-rings 82 are located in the remaining grooves 1, 3, 5 and 7 to seal against the male member. The male member 60 shown in Figs. 8 to 12 is of similar construction to that shown in Figs. 3 to 7 except for the head 62. At one end, the bores 64, 65 and 66 terminate at ports 64a, 65a and 66a.in the periphery of the reduced dimaeter section whilst the other ends of the bores terminate at ports 64b, 65b and 66b in the periphery of the head 62. When the male member 60 is positioned within the female member 33a the ports 64a, 65a and 66a align with internal grooves 6, 2 and 4 respectively to enable fluid to flow from ducts 54, 55, 56 to ducts 64, 65, 66. Fluid in duct 53 flows directly to duct 63.

The female members 33, 33a are located sealingly within the tubes 27, 28 to prevent leakage between the axial external grooves in the female members.

The male and female coupling members permit relative rotary movement to occur between them without interruption of fluid flow and the four sections of flexible tubing (57, 58) being shown in Fig.2 interconnecting the female members across the spindle 32 enables the pitch to be varied without interruption of fluid flow. If desired the male members could have grooved surfaces which co-operate with non-grooved internal surfaces of the female members.

Looking in more detail at the tool carrier 11, the piston 70 is slidable in a cylinder 90 to raise or lower the tapered pin 73. The pin has a reduced diameter dowel 92 at its lower end which locates accurately in a bush 93 in the carrier body. The carrier 11 is formed with a frusto-conical location 94 for a complementary shaped projection 95 on the adapter 72. The projection 95 carries a flange 96 formed with a tapered bore 97 having substantially the same angle of taper as pin 73. To locate the adapter 72 in the carrier 11, the piston 70 is raised to lift the pin 73. The projection 95 is then located in the location 94 and the piston is urged downwards so that the pin 73 enters bore 97 and engages the left hand surface of the bore as shown in broken lines in Fig.2. That causes the projection 95 to be urged firmly against the location 94 with adjacent surfaces of the carrier and adapter spaced by distance S to prevent abutment. The dowel 92 finally locates in the bush 93 to lock the adapter in place. An O-ring seal 98 on the adapter 72 ensures a fluid tight seal between a fluid feed via a passage 66b in the carrier and a passage 66c in the adapter 72. Similar seals can be used to effect sealing between any further surfaces of the carrier and adapter where fluid is to flow therebetween.

A further dowel 99 locates in a bore 100 in the adapter 72 to assist initial alignment of the carrier 11 and adapter 72.

The adapter can be conveniently picked up by controlled movement of the robot arm 12 and operation of valves (not shown) to control the piston 70.

The invention also relates to a tool carrier. According to this aspect of the invention there is provided a tool carrier comprising a movable retainer element arranged to retain or release a tool or a member on which the tool is to be carried, the element having a wedge surface so that movement thereof will urge the tool or member on which the tool is to be carried in a direction transverse to the direction of said movement and into firm engagement with a surface on the tool carrier.

The retainer element may be an axially movable pin e.g. a tapered pin.

The retainer element may include a section such as a dowel which engages locating means such as a bush to hold the tool or said member firmly in position.

The retainer element may be movable by a piston.

The tool or member may be formed with a duct for fluid which aligns with a duct in said tool carrier and, in such a case, sealing means may be provided between the carrier and a surface of the tool or member to inhibit leakage from the ducts during passage of fluid therethrough.

The tool carrier is preferably mounted on the arm of an industrial robot.

**0190907**

CLAIMS:

1. A fluid tight coupling including an axially-extending female member, an axially-extending male member coaxial with said female member and fitted therewithin, one of said members defining a plurality of inlet ducts, the other of said member defining a plurality of outlet ducts, characterised in that said one of said members defines at least three inlet ducts and in that the other of said members defines at least three outlet ducts. .

2. A fluid-tight coupling according to claim 1 characterised in that at least two of said inlet ducts include sections which are not coaxial with the associated two of said outlet ducts.

3. A fluid-tight coupling according to claim 1 or claim 2 characterised in that said at least two of said inlet ducts communicate with the associated said two of said outlet ducts at terminal positions which are spaced apart in the axial direction.

4. A fluid-tight coupling according to claim 3 characterised in that sealing means are positioned between said terminal positions.

5. A fluid-tight coupling according to any of claims 1 - 4 characterised in that at least one of the said inlet ducts and at least one of the said outlet ducts extend substantially coaxially through the respective male and female members.

6.     A fluid-tight coupling according to any of claims 1 - 5 characterised in that one of said members has two ducts which terminate at a peripheral portion thereof, and in that the other of said members has two internal peripheral grooves which are aligned respectively with said two ducts.

7.     A fluid-tight coupling according to any of claims 1 - 6 characterised in that said members are relatively rotatable about a common axis.

8.     A fluid-tight coupling according to any preceding claim characterised in that the outlet ducts are connected to the inlet ducts of a fluid-tight coupling as claimed in any of claims 1 - 7 by flexible conduit means.

9.     A fluid-tight coupling as claimed in claim 8 characterised in that the coupling is part of an arm, said arm comprising a first section, a second section pivotally mounted on the first section to enable the two sections to be pivoted relative to each other about a transverse axis, each of said sections having a fluid-tight coupling as claimed in any of claims 1 - 8.

10.     A fluid-tight coupling as claimed in claim 9 characterised in that one of the said sections carries a device, the device being fluid-connected to the fluid tight couplings in said first and second sections to be operated by fluid which passes through said couplings.

11.     A fluid-tight coupling as claimed in claim 10 characterised in that said device includes a device housing, said housing comprising a cylinder, and a piston movable in the cylinder, the piston carrying a tapered locating pin adapted to locate a replaceable tool holder.

12. A fluid-tight coupling as claimed in claim 11 characterised in that one of said ducts has a connection to one end of the cylinder, and in that another of said ducts has a connection to the other end of the cylinder, the piston being axially movable by fluid pressure in said cylinder from a first position to a second position between said connections, a transverse opening in said device, the tool holder being removably located in said opening, the tool holder having a frusto-conical bore, a tapered pin carried by the piston and aligned with said bore, the pin being axially movable into and out of engagement with a bore internal surface upon axial movement of said piston from said first to said second position and from said second to said first position respectively to urge the tool holder against a tool holder locating surface.

13. A tool carrier for use with a fluid-tight coupling as claimed in any of claims 1 - 12 characterised by a movable retainer element arranged to releasably retain a tool part, the said retainer element having a wedge surface such that movement thereof will urge the tool part in a direction transverse to the direction of said movement and into firm engagement with a surface on the tool carrier.

0190907

14.    A tool carrier as claimed in claim 13 characterised in that the tool part is a tool holder in which the tool is releasably retained.

FIG.1

FIG.2

0190907

FIG.3

FIG. 4

FIG 6

0190907

FIG.5

FIG.7

FIG.8

FIG.9

0190907

FIG.10

FIG.11

FIG.12

FIG.1

0190907

FIG.14

FIG.15

FIG.16

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 230 241 (SIGMA DIESEL) * Figure; page 1, lines 1-14; page 2, lines 38-40; page 4, lines 29-33; page 6, lines 20-23 * | 1-4,7 | F 16 L 39/04 B 23 Q 1/00 |
| A | | 5,6,10 | |
| X | FR-A-2 508 360 (MARTIN) * Figures 1-6; page 2, lines 6-10; page 2, line 18 - page 3, line 25; page 6, lines 16-29 * | 1-4,7 | |
| A | | 10-13 | |
| X | FR-A-2 531 764 (JACOTTET) * Figures 1-4; page 3, line 37 - page 5, line 35 * | 1-4,7 | TECHNICAL FIELDS SEARCHED (Int. Cl.4) |
| X | US-A-2 990 851 (JACKSON et al.) * Figures 1,2; claim 1 * | 1-4 | F 16 L B 23 Q |
| A | GB-A-2 074 686 (WEIRICH et al.) * Figure 2; abstract * | 8 | |

The present search report has been drawn up for all claims

| Place of search | Date of completion of the search | Examiner |
|---|---|---|
| THE HAGUE | 22-04-1986 | NARMINIO A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82